# EUROPEAN PATENT APPLICATION

(11) **EP 3 783 876 A1**
(43) Date of publication of application: **24.02.2021**
(21) Application number: 19020488.3
(22) Date of filing: 21.08.2019
(51) Int. Cl.: H04N 1/32, G06Q 20/32, G06Q 20/38, G06K 19/06, G06F 16/38, G06F 16/955

(54) **THE METHOD OF SINGLE-USE PROCESSING OF DATA SAVED IN A QUICK RESPONSE (QR) CODE**

(71) Applicant: Semble8 Limited, London EC2A 4NE (GB)
(72) Inventor: WEGNER, Piotr, London, E1 1NZ (GB)

(57) **Abstract**

The method of single-use processing of data saved in a Quick Response (QR) code is the invention that consist in that, after scanning the QR code with a device equipped with a camera and extracting from it the data, the obtained data is analysed in order to check whether the data saved in the QR code have not been used already, and if it have not, the data is used in the IT system (for example mobile application, web application), and after that the data is deactivated, which prevent it from further usage. The invention can be used in loyalty program, because it allows for sending to the participants of the loyalty program cards containing the QR code, which, upon scanning, will grant to the user points in the loyalty program. Apart from that this invention make it also easier and faster to top-up phones.

## Description

The subject of this invention is a method of single-use processing of data saved in a Quick Response (QR) code.

Quick Response (QR) codes are alphanumerical, two-dimensional, matrix-type, rectangular graphical codes. QR codes were invented by the Japanese company Denso-Wave in 1994. QR codes allow for encoding kanji/kana characters, which makes QR codes very popular in Japan. Besides, QR codes allow for encoding characters in Arabic, Greek, Hebrew and Cyrillic, as well as other symbols specified by the user.

There are two types of QR codes: basic (Model 1) and extended (Model 2), which allows for encoding up to 7089 numeric characters, 4296 alphanumeric characters, 1817 Kanji characters, 2953 bytes (8- bit) of binary data, or 984 UTF-8 characters.

There are forty accepted sizes of QR codes, accepted sizes span between 21x21 modules and 177x177 modules. For the purpose of saving larger amounts of information the specification allows for combining up to 16 QR codes.

The structure of the QR code allows for placing it on and reading it from items moving quickly in relation to the scanner, such as for example conveyors.

At current technical level QR codes can be used to save any data, which can be subsequently read in any place, time and amount. QR codes are increasingly more prevalent for encoding URLs (website addresses), contact data (e-mail, telephone number, residence address), data concerning transported packages (type and amount of goods), but they can also contain simple text messages (letters). This data is read through special modules, usually placed in mobile devices (smartphones) or mobile terminals (devices used in transportation). A module in QR code is a square which can be in one of two colors (dark or light). Larger numbers of modules constitute so-called code words, in which information is saved in specific characters. Dimensions of the entire QR code are variable, because the dimensions of single module are not clearly specified and depend on the capabilities of reading and writing devices.

Data saved in the form of a QR code can be easily transferred to other persons. It is enough to print them out, thus rendering them in a material form. The surface on which these codes will be printed does not matter. They may also be printed as stickers. Using a QR code, after scanning it, one is able to read the data saved in this code and in this manner enter any website, or a communicator allowing to reply to a message (e.g. by email or text message), or identify the shipment. QR codes may therefore be used, inter alia, for sending links to websites containing additional information about the sender (business cards), offered products, promotions, vouchers, links to shopping portals, as well as to websites containing audiovisual works (video or music files). In addition, using the QR code, one may also identify tickets purchased for a sporting event, concert, or entitling to use public transport.

In the current state of the art QR codes are used, among others down:
1) sending links redirecting to websites containing information about promotions or with vouchers, with music and video content or with contact details (application US20120085829A1),
2) sending and processing configuration data in mobile terminals (application PL229734),
3) storing company information on the business card (application PL387680),
4) storing information about the bank account and the user in the process of paying bills (application no PL399999),
5) coding information on the material composition of electrical and electronic equipment (application no PL402980),
6) making payments for goods in virtual currencies while maintaining the standard of presenting the sale offer in the traditional currency (application no PL410092).

All previous methods of using data saved using the QR code are in fact the possibility of multiple processing of data saved in the QR code. In other words, one is able to repeatedly use the data saved in this code.

The objective of this invention is introducing a mechanism that would guarantee single-use processing of data saved in a QR code in an IT system (for example mobile application, web application), after scanning the QR code with a device equipped with a camera. In other words, as a result of reading and subsequent processing of data saved in a QR code, it will not be possible to process the data again.

Single-use processing of data saved in a QR code can find use for example in loyalty programs, because it will allow for sending to the participants of the loyalty program cards containing the QR code, which, upon scanning, will grant to the user points in the loyalty program. Single-use processing of data, which means a single possibility of scanning such a code, will prevent situations in which the users could scan such a card multiple times to grant themselves a greater number of points, than actually earned.

This invention can also be used to make it easier and faster to top-up phones. Instead of tediously re-typing the code in the phone you could quickly scan the ward with a QR code, which holds the data required for topping up the phone. Single-use processing of data saved in a QR code will ensure that there is no possibility of a repeated top up of the phone using the same card with QR code.

The method of reading and processing data according to the invention consists in that, by using a scanning module (1) a picture of the QR code is obtained, which is then decoded using a decoding module (2) in order to extract information (data) saved in the QR code. The obtained data will be sent to the data processing module, in which they are analysed (3) in order to check whether the data saved in the QR code have not already been used and, if the data have not yet been used, the data saved in the QR code (4) is used in the IT system (web application, mobile application). Next - after using the data saved in the QR code - such data will be deactivated in the deactivation module (5). The data analysis module, the data usage module, and the data deactivation module may appear as one module fulfilling three functions, in which the entire process of processing data saved in the QR code takes place. The data analysis module, the data usage module, and the data deactivation module may also appear as independent modules in the IT system, as well as the analysis and usage modules may be one module, while the deactivation module will be a separate module. If when the analysis, usage, and deactivation module appear as one data processing module, in the case where during the data analysis it turns out that the data has already been used, the data processing will not continue. However, when the analysis module, usage module, and deactivation module appear as three independent modules, in the case where during the data analysis it turns out that the data has already been used, the data will not be sent to the data usage module.

To sum it up, the whole action will go down as follows:
1) scanning the code - obtaining the image of QR code,
2) de-coding the code - reading the data saved in the QR code,
3) data processing - processing the data saved in the QR code in the IT system (for example mobile application, web application), the first stage of data processing is analysis of data for the purposes of verification, whether the data saved in the QR code has been used previously. If the data has not been used previously, it will be processed in the IT system. If the data has been used previously, it will not be processed further in the IT system. The last stage of data processing is deactivation, preventing its future use by removing the data from the IT system, or tagging the data in a way that would allow the user to unambiguously determine during further analysis of data saved in the QR code, whether the data has been used previously.

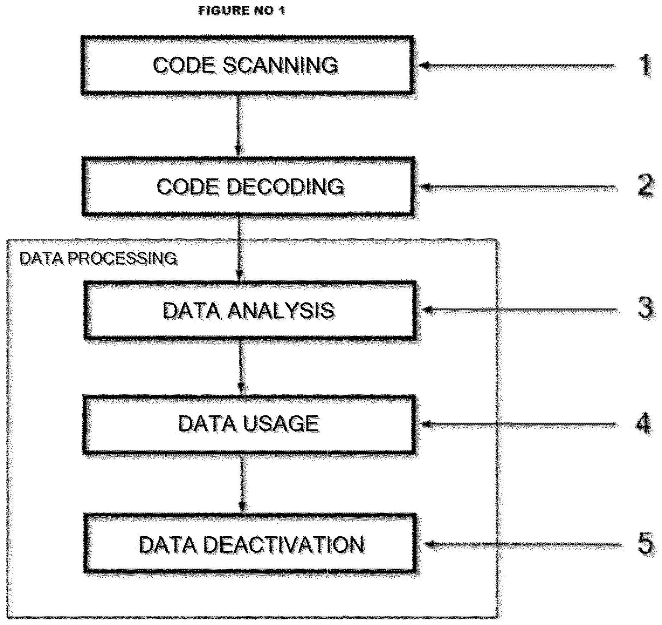

## Claims

1. The method of single-use processing of data saved in the QR, **characterized in that** by using a scanning module to obtain the image of the QR code, which is then decoded using a decoding module for the purpose of extracting information saved in the QR code, and the obtained information is transferred to data processing module, in which transferred information is analysed, and in cases when the data has not been used previously, is used in the IT system, and subsequently - after using it - the data is deactivated in the data deactivation module, which makes using the data saved in the code again impossible, whereas this can be done either with a single processing module or separate modules - for data analysis, data use and data deactivation.

## Amended claims

### Amended claims in accordance with Rule 137(2) EPC.

1. The method of single-use processing of data saved in the QR, **characterized in that** by using a scanning module to obtain the image of the QR code, which is then decoded using a decoding module for the purpose of extracting information saved in the QR code, and the obtained information is transferred to data processing module, in which transferred information is analysed, and in cases when the data has not been used previously, is used in the IT system, and subsequently - after using it - the data is deactivated in the data deactivation module, which makes using the data saved in the code again impossible, whereas this can be done either with a single processing module or separate modules - for data analysis, data use and data deactivation.
